# EUROPÄISCHE PATENTSCHRIFT

(11) **EP 0 888 933 B1**
(45) Veröffentlichungstag und Bekanntmachung des Hinweises auf die Patenterteilung: **09.04.2003**
(21) Anmeldenummer: 98112169.2
(22) Anmeldetag: 01.07.1998
(51) Int. Cl.: B60R 21/20

(54) **Gassack-Modul**
Airbag module
Module de coussin de sécurité gonflable

(30) Priorität: 03.07.1997 DE 29711679 U
(43) Veröffentlichungstag der Anmeldung: 07.01.1999
(73) Patentinhaber: TRW Occupant Restraint Systems GmbH & Co. KG, 73551 Alfdorf (DE)
(72) Erfinder: Seifert, Knut, 73527 Schwäbisch Gmünd/Lindach (DE)
(74) Vertreter: Degwert, Hartmut, Dipl.-Phys.

(56) Entgegenhaltungen:
- EP-A- 0 558 271
- EP-A- 0 897 352
- WO-A-97/06984
- US-A- 5 004 266
- US-A- 5 348 343
- US-A- 5 364 124
- PATENT ABSTRACTS OF JAPAN vol. 097, no. 002, 28. Februar 1997 & JP 08 268198 A (NIPPON PLAST CO LTD), 15. Oktober 1996

## Beschreibung

Die Erfindung betrifft einen Gassack-Modul mit einem in einem Gehäuse gefaltet verstauten Gassack und einer Abdeckung, die bei einer Entfaltung des Gassacks eine Beschleunigung erfährt.

Ein solcher Gassack-Modul wird im Fahrzeug gewöhnlich durch eine Abdeckung verborgen. Beim Aufblasen des Gassacks wird die Abdeckung durch den Dehnungsdruck geöffnet und läßt den Gassack austreten. Bei einem beifahrerseitigen Gassack-Rückhaltesystem hat sich die Anordnung des Gassack-Moduls unter der Instrumententafel bewährt. Die Abdeckung bildet eine Klappe, die lösbar in die Instrumententafel eingesetzt ist. Damit von der bei Aktivierung des Gassacks sich von der Instrumententafel lösenden Abdeckung keine Gefährdung ausgeht, ist die Abdeckung durch ein Fangband oder dergleichen mit der Instrumententafel verbunden. Da sich der Gassack zwischen der Oberseite der Instrumententafel und der geneigten Frontscheibe des Fahrzeugs ausbreitet, wird die Abdeckung nach oben gegen die Frontscheibe geschleudert. Wegen der großen Vehemenz, mit der ein sich entfaltender Gassack die Abdeckung gegen die Frontscheibe schleudert, kann diese zerstört werden.

In der WO-A-97/06984 ist ein Gassack-Modul mit einem in einem Gehäuse gefaltet verstauten Gassack gezeigt, der von einem Mantel mit einer Aufreißlinie umgeben ist. Der Mantel verhindert die freie Entfaltung des Gassacks in Richtung eines Fahrzeuginsassen. Reißt die Aufreißlinie durch den Dehnungsdruck des sich entfaltenden Gassack auf, kann sich der Gassack auch ungehindert von dem Mantel in Richtung des Fahrzeuginsassen ausbreiten.

In der US-A-5,004,266 ist ein von einem Band umgebener Gassack gezeigt. Das Band verhindert so lange die Ausdehnung des Gassacks in Richtung eines Fahrzeuginsassen, bis es entlang einer schmäler ausgeführten Stelle aufreißt.

In der JP-A-08268198 ist ein Gassack-Modul mit einem auf der Grundplatte gefalteten Gassack gezeigt, der zur Formstabilisierung von einer an der Grundplatte befestigten Hülle teilweise umgeben ist.

In der EP-A-897 352, die einen Stand der Tecknik nach Art. 54(3) EPU darstellt, ist ein Gassack-Modul gezeigt, der ein Gehäuse, einen gefaltet in dem Gehäuse verstauten Gassack, einen den Gassack umgebenden Mantel sowie eine eine Gehäuseöffnung verschließende Abdeckung aufweist. Der Mantel weist mehrere Aufreißlinien auf. Der Mantel umgibt den Gassack so, daß er während einer ersten Phase eine freie Entfaltung des Gassacks in Richtung des Fahrzeuginsassen zuläßt, während einer zweiten Phase die weitere Ausdehnung des Gassacks in Richtung des Fahrzeuginsassen behindert und nur eine weitere seitliche Entfaltung des Gassacks zuläßt, bis alle Aufreißlinien aufgerissen sind und die weitere Ausdehnung des Gassacks auch in Richtung des Fahrzeuginsassen freigegeben ist.

Durch die Erfindung wird ein Gassack-Modul bereitgestellt, der ein gesteuertes Austreten des Gassacks bei seiner Aktivierung ermöglicht und insbesondere eine Reduzierung der Auftreffgeschwindigkeit der Abdeckung auf einem Hindernis ermöglicht.

Gemäß der Erfindung ist der Gassack von einem mit einer Aufreißlinie versehenen Mantel umgeben, der während einer ersten Phase die freie Entfaltung des assacks in der vom Boden des Gehäuses fortweisenden Hauptrichtung bis zu einem Bruchteil seines Volumens zuläßt, dann während einer zweiten Phase durch den Dehnungsdruck des sich entfaltenden Gassacks gespannt wird und die weitere Ausdehnung des Gassacks seitlich von der Hauptrichtung zuläßt, bis der Mantel an der Aufreißlinie aufgerissen wird und die weitere Ausdehnung des Gassacks auch in der Hauptrichtung freigibt. Der Mantel ist so ausgebildet, daß die Abdeckung während der ersten Phase eine Beschleunigung und während der zweiten Phase im wesentlichen keine weitere Beschleunigung mehr erfährt, um so die Auftreffgeschwindigkeit der Abdeckung auf ein mögliches Hindernis zu reduzieren. Die Ausdehnung des Gassacks erfolgt somit in drei Phasen: In der ersten Phase tritt der Gassack aus dem Gehäuse aus, bis der Mantel gespannt ist. In der zweiten Phase erfolgt die Ausdehnung des Gassacks zu den Seiten der vom Boden des Gehäuses fortweisenden Hauptentfaltungsrichtung. Diese zweite Phase dauert an, bis durch den weiter angestiegenen Dehnungsdruck des Gassacks der Mantel entlang der Aufreißlinie aufgerissen wird und nun in der dritten Phase die Entfaltung des Gassacks auch in der Hauptentfaltungsrichtung freigibt. Die Abdeckung wird in der ersten Phase zunächst mit großer Wucht hochgedrückt, jedoch erfolgt anschließend in der zweiten und dritten Phase keine weitere Beschleunigung der Abdeckung, so daß diese mit relativ niedriger Geschwindigkeit gegen die Frontscheibe des Fahrzeugs auftrifft.

Durch den erfindungsgemäß vorgesehenen Mantel kann das Ausdehnungsverhalten des Gassacks gesteuert werden. Insbesondere ist durch die Ausgestaltung des Mantels, der Bestandteil des Gassack-Moduls ist, eine Anpassung an die Gegebenheiten in dem jeweiligen Fahrzeug möglich. Besonders zweckmäßig ist hierbei, daß diese Anpassung am Gassack-Modul selbst erfolgen kann. Um eine fahrzeugspezifische Verhaltensweise des sich entfaltenden Gassacks zu erreichen, ist lediglich der den gefalteten Gassack umgebende Mantel entsprechend zu gestalten.

Besonders zweckmäßig ist eine Ausgestaltung des Gassack-Moduls, bei der die Gassack-Packung und der gefaltet daraufliegende Mantel durch eine Hülle zusammengehalten sind. Bei der Hülle kann es sich um eine leicht aufreißbare Folie handeln, die das Ausdehnungsverhalten des Gassacks nicht oder nur in geringem Maße beeinflußt.

Der Mantel ist bei der bevorzugten Ausführungsform der Erfindung durch einen im flach ausgebreiteten Zustand rechteckförmigen Textilstreifen gebildet, dessen Enden am Gehäuse festgelegt sind. Der so ausgebildete Mantel wirkt nach Art eines Gürtels, der den sich ausdehnenden Gassack einschnürt und so in der zweiten Phase die Ausdehnung des Gassacks von der Hauptrichtung zu den Seiten umlenkt. Vorzugsweise wird die Aufreißlinie unsymmetrisch angeordnet, insbesondere auf der im Einbauzustand von der Frontscheibe des Fahrzeugs abgewandten Seite.

Weitere Merkmale und Vorteile der Erfindung ergeben sich aus der folgenden Beschreibung einer bevorzugten Ausführungsform des Gassack-Moduls unter Bezugnahme auf die Zeichnungen. In den Zeichnungen zeigen:
Fig. 1 schematisch einen Querschnitt des Gassack-Moduls;
Fig. 2 schematisch eine Draufsicht des Gassack-Moduls; und
Fig. 3 eine schematische Seitenansicht des Gassack-Moduls im Fahrzeug, wobei die verschiedenen Phasen der Gassackentfaltung dargestellt sind.

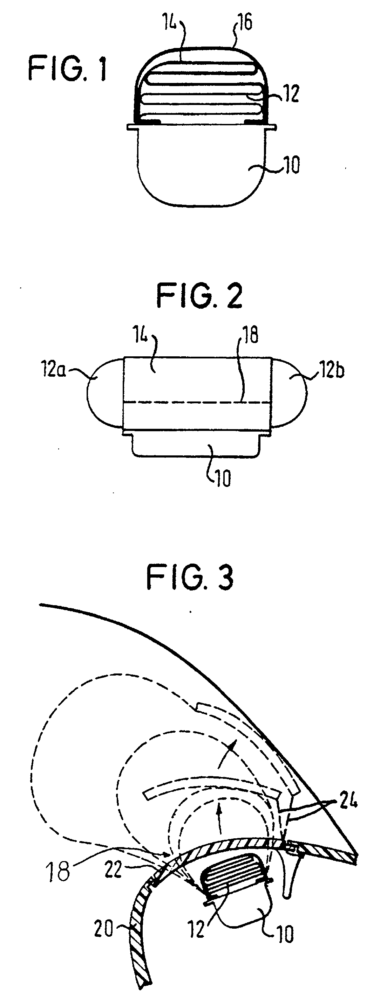

Der in den Figuren 1 bis 3 gezeigte Gassack-Modul besteht aus einem wannenförmigen Gehäuse 10 mit einem darin eingesetzten Gasgenerator und einem in dem Gehäuse gefaltet verstauten Gassack 12, der den oberen Rand des Gehäuses 10 überragt. Die gefaltete Gassack-Packung ist von einem Mantel 14 umgeben, der aus einem im flach ausgebreiteten Zustand rechteckförmigen Textilstreifen besteht, dessen Enden an zwei einander gegenüberliegenden Rändern des Gehäuses 10 befestigt sind. Der den Mantel 14 bildende Textilstreifen läßt die Seiten 12a, 12b der gefalteten Gassack-Packung frei; sie stehen über den Mantel 14 seitlich hinaus. Die Länge des den Mantel 14 bildenden Textilstreifens ist größer als der Umfang des aus dem Gehäuse 10 herausragenden Teils der Gassack-Packung. Wie aus Fig. 1 ersichtlich ist, liegt der Mantel 14 seinerseits gefaltet auf der gefalteten Gassack-Packung auf. Der Gassack 12 und der Mantel 14 sind von einer Hülle 16 umgeben, die aus einer leicht aufreißbaren Folie besteht. Wie schließlich aus Fig. 2 ersichtlich ist, erstreckt sich eine Aufreißlinie 18 über die gesamte Breite des Mantels 14. Diese Aufreißlinie 18 ist unsymmetrisch angeordnet, wie weiter unten unter Bezugnahme auf Fig. 3 erläutert wird.

Fig. 3 zeigt die Anordnung des Gassack-Moduls im Fahrzeug. Es handelt sich um einen Gassack-Modul für ein beifahrerseitiges Gaskissen-Rückhaltesystem. In an sich bekannter Weise ist der Gassack-Modul unter dem oberen Bereich einer Instrumententafel 20 des Fahrzeugs angeordnet. Eine klappenförmige Abdeckung 22 für den Gassack-Modul ist an der Oberseite der Instrumententafel 20 lösbar eingesetzt. Diese Abdeckung 22 ist an ihrem der Frontscheibe des Fahrzeugs benachbarten Rand mittels eines Fangbandes 24 an der Instrumententafel 20 befestigt. Wie aus Fig. 3 ersichtlich ist, liegt die Aufreißlinie 18 auf der von der Frontscheibe abgewandten Seite des Gassack-Moduls. Die Lage dieser Aufreißlinie 18 ist für die angestrebte Entfaltungsrichtung des Gassacks 12 von Bedeutung.

Zur Aktivierung des Gassacks wird dieser durch den im Inneren des Gehäuses 10 angeordneten Gasgenerator aufgeblasen. Nachdem die Folie 16 aufgerissen ist, wird der Mantel 14 hochgedrückt, woraufhin sich auch die Abdeckung 22 aus der Instrumententafel 20 löst. In Fig. 3 sind die verschiedenen Zustände des Mantels 14 und des Gassacks 12 ebenso wie der Abdeckung 22 gestrichelt dargestellt. In einer ersten Phase entfaltet sich der Mantel 14 durch den Dehnungsdruck des Gassacks 12, der in der durch einen Pfeil in Fig. 3 bezeichneten Hauptrichtung aus dem Gehäuse 10 austritt. Diese Hauptrichtung ist senkrecht vom Boden des Gehäuses 10 fort gerichtet. Nachdem der Mantel 14 gespannt ist, kann sich der Gassack 12 zunächst nicht weiter in dieser Richtung ausbreiten. Statt dessen setzt sich die Ausdehnung des Gassacks an den Seiten 12a, 12b fort. Wenn nun der Dehnungsdruck des Gassacks weiter anwächst, reißt der Mantel 14 an der Aufreißlinie 18 auf. In der nun folgenden dritten Phase kann sich der Gassack 12 wieder überwiegend in der Hauptrichtung ausbreiten. Während der ersten Phase löst sich die Abdeckung 22 aus der Instrumententafel 20 und wird bis zu dem Zeitpunkt, zu dem der Mantel 14 gespannt ist, gegen die Frontscheibe beschleunigt. In der anschließenden zweiten Phase erfolgt jedoch keine weitere Beschleunigung der Abdeckung 22 in Richtung der Frontscheibe. Erst in der dritten Phase, wenn die Abdeckung 22 schon an der Innenseite der Frontscheibe anliegt oder sich kurz vor dieser Endstellung befindet, erfolgt durch den sich vollends entfaltenden Gassack ein weiterer Druck gegen die Abdeckung 22 und auch gegen die Frontscheibe.

Es ist somit ersichtlich, daß durch den Mantel 14 zum einen das Ausdehnungsverhalten des Gassacks maßgeblich beeinflußt werden kann, wobei durch Ausbildung des Mantels 14 und insbesondere Anordnung der Aufreißnaht 18 vielfältige Beeinflussungsmöglichkeiten bestehen, und darüber hinaus die Wucht, mit der die Abdeckung 22 gegen die Frontscheibe geschleudert wird, erheblich reduziert wird.

## Patentansprüche

1. Gassack-Modul mit einem in einem Gehäuse (10) gefaltet verstauten Gassack (12) und einer Abdeckung (22), die bei einer Entfaltung des Gassacks (12) eine Beschleunigung erfährt, wobei der Gassack (12) von einem mit einer Aufreißlinie (18) versehenen Mantel (14) umgeben ist, der während einer ersten Phase die freie Entfaltung des Gassacks (12) in der vom Boden des Gehäuses (10) fortweisenden Hauptrichtung bis zu einem Bruchteil seines Volumens zuläßt, dann während einer zweiten Phase durch den Dehnungsdruck des sich entfaltenden Gassacks (12) gespannt wird und die weitere Ausdehnung des Gassacks (12) seitlich von der Hauptrichtung zuläßt, bis der Mantel (14) an der Aufreißlinie (18) aufgerissen wird und die weitere Ausdehnung des Gassacks (12) auch in der Hauptrichtung freigibt, und wobei der Mantel so ausgebildet ist, daß die Abdeckung (22) während der ersten Phase eine Beschleunigung und während der zweiten Phase im wesentlichen keine weitere Beschleunigung mehr erfährt, um so die Auftreffgeschwindigkeit der Abdeckung (22) auf ein mögliches Hindernis zu reduzieren.

2. Gassack-Modul nach Anspruch 1, **dadurch gekennzeichnet, daß** der Mantel (14) auf der gefalteten Gassack-Packung seinerseits gefaltet aufliegt.

3. Gassack-Modul nach Anspruch 2, **dadurch gekennzeichnet, daß** die Gassack-Packung und der gefaltet daraufliegende Mantel (14) durch eine Hülle (16) zusammengehalten sind.

4. Gassack-Modul nach einem der Ansprüche 1 bis 3, **dadurch gekennzeichnet, daß** der Mantel (14) durch einen im flach ausgebreiteten Zustand rechteckförmigen Textilstreifen gebildet ist, dessen Enden am Gehäuse festgelegt sind.

5. Gassack-Modul nach Anspruch 4, **dadurch gekennzeichnet, daß** der Mantel (14) die Seiten der Gassack-Packung freiläßt.

6. Gassack-Modul nach einem der Ansprüche 1 bis 5, **dadurch gekennzeichnet, daß** die Aufreißlinie (18) unsymmetrisch angeordnet ist.

7. Gassack-Modul nach einem der Ansprüche 1 bis 6, **dadurch gekennzeichnet, daß** die Abdeckung (22) eine Klappe ist, die lösbar in eine Fahrzeug-Instrumententafel (20) eingesetzt und mit dieser durch wenigstens ein Fangband (24) verbunden ist.

## Claims

1. A gas bag module comprising a gas bag (12) stowed folded in a housing (10) and a cover (22) experiencing an acceleration in the case of deployment of the gas bag (12), the gas bag (12) being surrounded by a jacket (14) which is provided with a tear line (18) and permits, during a first phase, free deployment of the gas bag (12) in the main direction away from the bottom of the housing (10) up to a fraction of its volume, then, during a second phase, is tensioned by the force of expansion of the gas bag (12) during deployment and permits further expansion of the gas bag (12) laterally away from the main direction until the jacket (14) is torn open at the tear line (18), permitting further expansion of the gas bag (12) also in the main direction, and the jacket being designed such that the cover (22) experiences an acceleration during the first phase and substantially no further acceleration during the second phase in order to thus reduce the velocity of impact of the cover (22) on a potential obstacle.

2. The gas bag module as set forth in claim 1, **characterized in that** the jacket (14) itself lies folded on the folded gas bag package.

3. The gas bag module as set forth in claim 2, **characterized in that** the gas bag package and the jacket (14) lying folded thereon are held together by an envelope (16).

4. The gas bag module as set forth in any of claims 1 to 3, **characterized in that** the jacket (14) is formed by a strip of textile material which is rectangular when spread out flat, the ends of which are secured to the housing.

5. The gas bag module as set forth in claim 4, **characterized in that** the jacket (14) leaves the sides of the gas bag package uncovered.

6. The gas bag module as set forth in any of claims 1 to 5, **characterized in that** the tear line (18) is arranged non-symmetrically.

7. The gas bag module as set forth in any of claims 1 to 6, **characterized in that** the cover (22) is a flap releasably inserted in a vehicle dashboard (20) and connected thereto by at least one tether (24).

## Revendications

1. Module de coussin à gaz avec un coussin à gaz (12) replié rangé dans un boîtier (10) et un couvercle (22) qui subit une accélération lorsque le coussin à gaz (12) se déploie, le coussin à gaz (12) étant entouré d'une ceinture (14) pourvue d'une ligne d'arrachement (18) qui permet pendant une première phase le déploiement libre du coussin à gaz (12), jusqu'à une fraction de son volume, dans la direction principale orientée en éloignement du fond du boîtier (10), qui est ensuite tendue pendant une deuxième phase par la pression d'expansion du coussin à gaz (12) en déploiement et qui permet la poursuite de l'expansion du coussin à gaz (12) latéralement à la direction principale jusqu'à ce que la ceinture (14) soit arrachée sur la ligne d'arrachement (18), et qui libère la poursuite de l'expansion du coussin à gaz (12) également dans la direction principale, et la ceinture étant réalisée de telle sorte que le couvercle (22) subit une accélération pendant la première phase et ne subit sensiblement plus d'accélération pendant la deuxième phase pour réduire ainsi la vitesse d'impact du couvercle (22) sur un obstacle éventuel.

2. Module de coussin à gaz selon la revendication 1, **caractérisé en ce que** la ceinture (14) repose en étant elle-même replié sur le paquet de coussin à gaz plié.

3. Module de coussin à gaz selon la revendication 2, **caractérisé en ce que** le paquet de coussin à gaz et la ceinture (14) repliée posée sur celui-ci sont retenus ensemble par une gaine (16).

4. Module de coussin à gaz selon l'une des revendications 1 à 3, **caractérisé en ce que** la ceinture (14) est formée par une bande textile de forme rectangulaire à l'état étendu à plat, dont les extrémités sont fixées au boîtier.

5. Module de coussin à gaz selon la revendication 4, **caractérisé en ce que** la ceinture (14) laisse ouverts les côtés du paquet de coussin à gaz.

6. Module de coussin à gaz selon l'une des revendications 1 à 5, **caractérisé en ce que** la ligne d'arrachement (18) est agencée de manière asymétrique.

7. Module de coussin à gaz selon l'une des revendications 1 à 6, **caractérisé en ce que** le couvercle (22) est un volet qui est inséré de manière détachable dans un tableau de bord (20) de véhicule et qui est relié à celui-ci par au moins une bande de garde (24).
